(19) **Europäisches Patentamt**

**European Patent Office**

**Office européen des brevets**

(11) **EP 1 054 255 A1**

(12) **EUROPÄISCHE PATENTANMELDUNG**

(43) Veröffentlichungstag:
22.11.2000 Patentblatt 2000/47

(51) Int. Cl.[7]: **G01N 29/10**

(21) Anmeldenummer: **99109997.9**

(22) Anmeldetag: **21.05.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder:
**BETRIEBSFORSCHUNGSINSTITUT VDEh, INSTITUT FÜR ANGEWANDTE FORSCHUNG GmbH
D-40237 Düsseldorf (DE)**

(72) Erfinder:
• **Coen, Günther, Dr.
40627 Düsseldorf (DE)**
• **Luhn, Ernst
42781 Haan (DE)**
• **Oberhoff, Dietmar
42799 Leichlingen (DE)**

(74) Vertreter:
**König, Reimar, Dr.-Ing.
König-Plagen-Schumacher-Kluin
Patentanwälte
Postfach 11 09 46
40509 Düsseldorf (DE)**

(54) **Ultraschallprüfverfahren zur Fehlerartklassierung**

(57)     Die Erfindung betrifft ein Verfahren zur zerstörungsfreien Materialprüfung, bei dem mindestens zwei unterschiedlich geführte Wellen (Mode) mit mindestens je einem spezifizierten Winkel im Festkörper erzeugt werden, die gemessenen Reflexionswerte in Bezug zu einem Referenzecho gesetzt werden, um einen relativen Reflexionswert zu erhalten und die relativen Reflexionswerte der einzelnen Moden wiederum in Relation zueinander gesetzt werden, wodurch sich die Fehler in ihrer Größe und Art bestimmen lassen.

**EP 1 054 255 A1**

Printed by Xerox (UK) Business Services
2.16.7 (HRS)/3.6

**Beschreibung**

Die Erfindung betrifft ein Verfahren zur zerstörungsfreien Materialprüfung.

Derartige Verfahren werden zum Prüfen von Stäben, Drähten oder Planen eingesetzt.

Ein bekanntes Verfahren zur zerstörungsfreien Materialprüfung stellt das Wirbelstromverfahren dar. Hierbei werden Materialfehler durch Erzeugen eines Magnetfeldes im Wege der Induktion detektiert. Dieses Verfahren wird auch in Drahtprüfanlagen eingesetzt.

Beispielsweise zur Drahtprüfung ist es bekannt, Rotationsprüfanlagen zu verwenden. Bei der Drahtprüfung mit Rotationsdrahtprüfanlagen wird eine freie Ultraschallwelle im Material erzeugt, deren Reflexionsecho am Materialfehler detektiert werden kann.

Mit diesem Verfahren lassen sich jedoch Außenfehler, die den Großteil der Materialfehler ausmachen, nicht erkennen. Darüber hinaus lassen sich freie Wellen nicht in allen Körpern erzeugen. So ist beispielsweise in Drähten mit einem Durchmesser unter 15 mm eine Materialprüfung mit einer freien Welle nicht möglich.

Eine bekannte Ultraschallprüfmethode bedient sich einer eindimensional geführten Welle (Mode), die mit Hilfe eines Piezogebers erzeugt wird. Unter einer ein- oder zweidimensional geführten Ultraschallwellen versteht man eine elastische Welle, deren Wellenlänge in ein bzw. zwei Dimensionen vergleichbar oder groß zu den Linearabmessungen des Meßkörpers ist. Teile der Grenzfläche stehen ständig in Wechselwirkung mit der Welle und verursachen so eine Führung der Welle entlang dieser Grenzfläche. Dadurch wirkt der Körper als Wellenleiter.

Das Reflexionsecho der Welle läßt sich erfassen und gibt dann Aufschluß über die Existenz eines Materialfehlers. Aus der Amplitude des Echos läßt sich auch eine gewisse Aussage über die Fehlergröße herleiten. Diese Aussage beruht jedoch auf Erfahrungs- und Schätzwerten und stimmt häufig nicht mit den tatsächlichen Gegebenheiten überein. Fehleinschätzungen sind insbesondere auf Störechos, wie beispielsweise das Materialaußenwandecho oder Echos anderer Schallreflektoren zurückzuführen.

Aus der deutschen Offenlegungsschrift 41 33 648 ist es bekannt, Stäbe mit zweidimensional geführten Stabwellen zu prüfen. Dies erlaubt eine empfindliche Fehlerermittlung und Fehlergrößenbestimmung.

Durch Auswertung der Amplitude, des Laufwegs und der Dämpfung der Wellenreflexion am Fehler, läßt sich eine Fehlerquerschnittsfläche mit Hilfe der Ersatzfehlermethode errechnen. Der gemessene Reflexionswert enthält zwar implizit Informationen über die Fehlergröße und über die Fehlerart. Eine Aussage über die Fehlerart, d.h. die Exzentrizität des Fehlers ist aber nicht möglich, da keine Möglichkeit bekannt ist, eine Beziehung zwischen den Meßwerten und der Exzentrizität des Fehlers herzustellen. Alle Ansätze einer Fehlerartklassierung sind bisher gescheitert.

Bei der Prüfung von Bändern mit eindimensional geführten Plattenwellen ("Lamb-Moden") wurde durch den Anmelder bereits versucht, durch Verwendung eines Systems mit einer geführten Welle, die über zwei Einstrahlwinkel in den Prüfling eingestrahlt wird, die Exzentrizität der Materialfehler aus den beiden ermittelten Echos herzuleiten Diese Versuche haben jedoch aufgrund der konkreten Materialeigenschaften nicht zum Erfolg geführt.

Der Erfindung liegt das Problem zugrunde, ein Verfahren zur zerstörungsfreien Materialprüfung zu schaffen, das eine Fehlergrößenbestimmung und eine Fehlerartklassierung erlaubt.

Ein weiteres Problem der Erfindung besteht darin, ein schnelles Ermitteln der Fehlerart zu ermöglichen.

Das Problem wird gelöst durch ein Verfahren gemäß Anspruch 1, bei dem mindestens zwei unterschiedliche geführte Wellen (Moden) mit mindestens je einem spezifizierten Winkel im Festkörper erzeugt werden, die gemessenen Reflexionswerte in Bezug zu einem Referenzecho gesetzt werden, um einen relativen Reflexionswert zu erhalten und die relativen Reflexionswerte der einzelnen Moden in Relation zueinander gesetzt werden, wodurch sich die Fehler in ihrer Größe und Art bestimmen lassen.

Jeder Meßwert eines jeden Modes enthält dabei eine gekoppelte Information über die Fehlergröße und die Fehlerart. Durch Kombination der Informationen zweier - geführter Wellen lassen sich die jeweiligen Werte für die Fehlergroße und für die Fehlerart getrennt und unabhängig voneinander ermitteln, indem der jeweils andere Wert eliminiert wird.

Die geführte Welle wird zunächst so eingestrahlt, daß sich ein Reflexionswert ergibt, der das Fehlerecho und ein Referenzecho enthält. Diese kann beispielsweise das Rückwandecho einer gemessenen Platte sein. Das Rückwandecho kann vom Fehlerecho unterschieden werden, da es eine längere Laufzeit besitzt. Mit dem Rückwandecho und dem Fehlerecho läßt sich das relative Fehlerecho jedes Modes ermitteln.

Als Referenzecho läßt sich jeder Schallreflektor einsetzen, wie beispielsweise eine Druckstelle einer Drahtumlenkrolle am Draht Vorzugsweise wird als Referenzecho das größte ermittelbare Signal gewählt.

Das relative Fehlerecho wird für zwei unterschiedlich geführte Wellen (Moden) gemessen. Die Meßwerte werden in die für die betroffene Wellenart und den Wellenmoden gültigen implizierten Funktionen der Fehlerart und Fehlerfläche eingesetzt.

Aus der Kombination geeigneter Funktionen der gewählten Moden, die sich durch Entkopplung und Skalarisierung der Wellengleichungen für die Komponenten des Vektors der Teilchenverschiebung ermitteln lassen, läßt sich dann der Wert für die Fehlerart und die Fehlergröße für jede Art von geführten Wellen (Rayleigh-Wellen, Plattenwellen, Stabwellen, Rohrwellen) rechnerisch ermitteln.

Da es sich um eine zeitaufwendige Rechnung handelt und bei der Materialprüfung, wie beispielsweise bei der Ultraschallprüfung von kaltgewalztem Stahlband eine kontinuierliche Fehlerermittlung in Echtzeit am laufenden Band erwünscht ist, können die Reflexionswerte zur Beschleunigung der Fehlerermittlung vor dem Meßvorgang für eine gewünschte Zahl von Fehlergrößen und Fehlerarten errechnet werden, so daß während der Messung nur noch ein Vergleich des gemessenen Reflexionswertes mit den errechneten Reflexionswerten erforderlich ist, um schnell den detektierten Fehler nach Art und Größe bewerten zu können.

Zur Erhöhung der Genauigkeit des Meß- und Prüfsystems lassen sich die Randbedingungen an der Fehleroberfläche, d.h. die Normalkomponenten des Spannungstensors an den freien Oberflächen des Materials berücksichtigen. Denn ohne Berücksichtigung des Randwertproblems ist eine bestimmte Abweichung des gemessenen Reflexionswertes und des daraus ermittelten Fehlerwertes von der tatsächlichen Fehlergröße und Fehlerart gegeben, da zunächst von einer vollständigen Reflexion des Fehlers ausgegangen wird und die tatsächliche Fehlergröße bzw. die randwertbedingte Abweichung der Fehlerreflexion von der vollständigen Reflexion nur aus Erfahrungswerten geschätzt wird.

Zur Berücksichtigung der tatsächlich auftretenden Randbedingungen, die zu einer Reflexionsverfälschung der Reflexion des Fehlers führen, müssen die Randbedingungen in die Fehlerberechnung direkt mit einfließen. Dazu werden zunächst die tensoriellen Randbedingungen durch geeignete Zerlegung des Vektors der Teilchenverschiebung in drei linear unabhängige Teilvektoren und durch Verwendung dreier geeigneter skalarer Potentiale skalarisiert.

Da eine vollständige Entkopplung für die Randbedingungen nicht möglich ist, wird eine aus der Quantenmechanik bekannte Näherungsmethode eingesetzt, um für die Praxis befriedigende Werte zu erhalten. Mit Hilfe der Störungsrechnung gelingt überraschenderweise bereits mit einer Näherung erster Ordnung eine gute Fehlerklassierung.

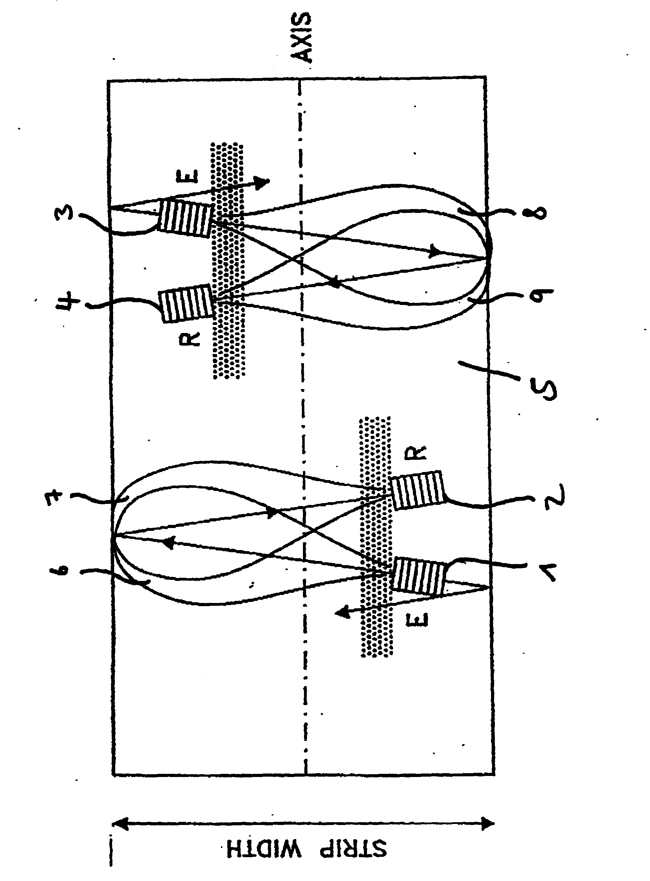

Im folgenden wird die Erfindung anhand eines in der Zeichnung dargestellten Ausführungsbeispiels des näheren erläutert.

Ein Beispiel für die Anwendung des erfindungsgemäßen Verfahrens wird im folgenden an der Fehlerermittlung für kaltgewalztes Stahlband mit zwei Moden für Plattenwellen erläutert, wobei der Ausgangspunkt die Ausbreitung einer elastischen Plattenwelle in einem elastischen, dämpfungsfreien, homogenen, nicht piezoelektrischen Festkörper bildet.

Konstruktiv ist zur Verwirklichung der Erfindung zunächst eine Anordnung der Ultraschallsender und -empfänger erforderlich, die eine Ausbreitung der geführten Welle in der Platte erlaubt und bei der Sende- und Empfangskegel sich im jeweiligen Intensitätsmaximum überlappen.

Eine solche Anordnung ist in der Zeichnung dargestellt, wobei Sender- und Empfängerpaare 1,2,3,4 oberhalb eines Stahlbandes 5 einer Kaltwalzstraße in bestimmtem Winkel so angeordnet sind, daß die Schallkegel 6,7 sich mit dem Empfangskegel 8,9 im Intensitätsmaximum schneiden. Empfänger und Sender sind bei einem Wandlerabstand von Wandlermitte zu Wandlermitte von 60 mm, einer Wandlerbreite von je 50 mm und einer Wellenlänge von 4 mm bei einem Abstand von ca. 0,4 mm vom Stahlband mit je 3,5° zur Vertikalen angeordnet. Der Winkel ist so gewählt, daß das Schallbündel nahezu divergenzfrei ist.

Der am jeweiligen Empfänger gemessene Wert wird zunächst in Relation zum gemessenen Referenzecho gebracht. Dieser relative Wen erlaubt nach entfernungsabhängiger Dämpfungs- und Divergenzkorrektur aufgrund folgender Überlegungen in Verbindung mit dem relativen Meßwert des anderen Empfängers die Ermittlung der Fehlerart und Fehlergröße, wobei für Stahlbänder vorzugsweise SH-Moden und Lamb-Moden zum Einsatz kommen.

In einer homogenen, isotropen, dämpfungsfreien, nicht piezoelektrischen, elastischen Platte der konstanten Dicke $d$ breite sich eine Plattenwelle aus. Das kartesische Koordinatensystem $(x_1, x_2, x_3)$ mit den Normaleneinheitsvektoren $e_1$, $e_2$, $e_3$ zur Beschreibung dieser Wellenausbreitung sei so gewählt, daß die Schallausbreitung in die $x_1$-Richtung falle, die beiden Plattenoberflächen paralle 1 und symmetrisch zur Ebene $x_2=0$ liegen mögen und die Platte selbst durch die Ordnungsrelation $-d/2 \leq x_2 \leq +d/2$ charakterisiert werde.

Bedient man sich zur Formulierung des Randwertproblems un d aller weiteren Berechnungen der Tensorrechnung und bezeichnet die Zeit mit $t$, die Dichte mit $\rho$, den Spannungsstensor mit T, den Vektor der Teilchenverschiebung mit **u** und den Vektor der Kraftdichte mit **f**, dann gilt bei Verwendung des $\nabla$-Operators für die Plattenwelle die dynamische Grundgleichung

$$\nabla \cdot T = \rho \frac{\partial^2}{\partial t^2} \mathbf{u} - \mathbf{f} \qquad (1)$$

und die Materialgleichung

$$T = \mu\left[(\nabla \mathbf{u}) + (\nabla \mathbf{u})^T\right] + \lambda(\nabla \cdot \mathbf{u})I \tag{2}$$

Die Quelle der Plattenwelle befinde sich bei $x_1 = -\infty$. Dann gilt im Endlichen:

$$\mathbf{f} \equiv 0 \tag{3}$$

Aus (1), (2) und (3) folgt für den Vektor der Teilchenverschiebung sofort nachstehende Bewegungsleichung:

$$\mu\Delta\mathbf{u} + (\mu + \lambda)\nabla(\nabla \cdot \mathbf{u}) - \rho\frac{\partial^2}{\partial t^2}\mathbf{u} = 0 \tag{4}$$

Diese Bewegungsgleichung läßt sich durch Einführung dreier geeigneter Potentiale $\varphi$, $\psi$, $\chi$ in drei skalare, entkoppelte Wellengleichungen aufspalten.

Die Randbedingungen für das Ausbreitungsproblem der monochromatischen elastischen Plattenwellen sind gegeben durch die Forderung des identischen Verschwindens der Normalkomponenten des Spannungstensors T an den beiden "freien" Oberflächen. Man erhält somit unmittelbar:

$$\left(T \cdot \mathbf{e}_2\right)_{x_2 = -\frac{d}{2}} \equiv 0 \quad \wedge \quad \left(T \cdot \mathbf{e}_2\right)_{x_2 = +\frac{d}{2}} \equiv 0 \tag{5}$$

Aus (5) folgt bei Beachtung von (2) sofort die Formulierung der Randbedingungen für den Vektor **u** der Teilchenverschiebung:

$$\begin{aligned}
\left(\partial_2 u_1 + \partial_1 u_2\right)_{x_2 = -\frac{d}{2}} \equiv 0 &\quad \wedge \quad \left(\partial_2 u_1 + \partial_1 u_2\right)_{x_2 = +\frac{d}{2}} \equiv 0 &\quad \wedge \\
\left(\lambda\partial_1 u_1 + (2\mu + \lambda)\partial_2 u_2\right)_{x_2 = -\frac{d}{2}} \equiv 0 &\quad \wedge \quad \left(\lambda\partial_1 u_1 + (2\mu + \lambda)\partial_2 u_2\right)_{x_2 = +\frac{d}{2}} \equiv 0 &\quad \wedge \\
\left(\partial_2 u_3\right)_{x_2 = -\frac{d}{2}} \equiv 0 &\quad \wedge \quad \left(\partial_2 u_3\right)_{x_2 = +\frac{d}{2}} \equiv 0 &\quad ;
\end{aligned} \tag{6}$$

Die Randbedingungen (6) lassen sich durch Einführung der drei skalarer Potentiale $\varphi$, $\psi$, $\chi$ zwar ebenso skalarisieren wie die Bewegungsgleichen (4), jedoch gelingt die Entkopplung nur teilweise: Die Potentiale $\varphi$ und $\psi$ bleiben miteinander gekoppelt, während das Potential $\chi$ und die damit verbundene Teillösung des Randwertproblems völlig entkoppelt ist.

Als Lösung des Randwertproblems in Platten ergeben sich die Plattenwellen: Die Eigenlösungen des gekoppelten Randwertproblems heißen Lamb-Moden, die Eigenlösungen, die mit dem Potential $\chi$ verknüpft ist, heißen SH-Moden.

**SH-Moden**

Die SH-Moden (SH = shear horizontal, horizontal zur Plattenoberfläche polarisierte Scherwellen) sind dadurch gekennzeichnet, daß der Vektor der Teilchenverschiebung immer parallel zur Plattenoberfläche gerichtet ist. Die SH-Moden sind nicht zu verwechseln mit den sich frei ausbreitenden Scherwellen, die manchmal SH-Wellen genannt werden. Lediglich für den niedrigsten SH-Mode ($n = 0$) stimmen die Teilchenauslenkungen überein, das heißt, die SH-Welle entspricht dem Mode **SS₀**.

Als Eigenwertgleichung ("Dispersionsgleichung") für die SH-Moden ergibt sich für die dimensionslose laterale Koordinate des Wellenzahlvektors der Tranversalwelle, die die Plattenwelle erzeugt:

$$\gamma_T = \frac{n\pi}{2} \quad \wedge \quad n \in \tilde{O}_0 \qquad (7)$$

Da die SH-Moden als Plattenwellen zu der Masse der eindimensional geführten Wellen gehören, kann die laterale Koordinate des Wellenzahlvektors $k_T$ - wie aus (7) ersichtlich - nur diskrete Werte annehmen. Dabei repräsentieren die Eigenfunktionen zu den Eigenwerten mit geradzahligem Index n die Klasse de **r** symmetrischen SH-Moden und die Eigenfunktionen zu den Eigenwerten mit ungeradzahligem Index n die Klasse der antisymmetrischen SH-Moden.

Der Vektor der Teilchenverschiebung speziell für den symmetrischen SH-Mode **SS₀** ergibt sich zu:

$$u^{(SS_0)} = A^{(SS_0)} cos\left[k\left(x_1 - c_T t\right)\right]e_3 \qquad (8)$$

Der reelle, zeitabhängige akustische Poynting-Vektor speziell für den symmetrischen SH-Moden **SS₀** ergibt sich daraus zu:

$$P^{(SS_0)} = \rho c_T^3 k^2 A^{(SS_0)2} sin^2\left[k\left(x_1 - c_T t\right)\right]e_1 \qquad (9)$$

Die Berechnung des Reflexionskoeffizienten eines Modes für eine Fehlstelle geschieht nun mit den Methoden der Störungstheorie: In nullter Näherung wird zunächst angenommen, daß der jeweilige Mode durch den Fehler nur insofern gestört wird, als die an der Fehlstelle ankommende akustische Leistungsflußdichte vom Fehlerquerschnitt vollständig, divergenzfrei und ohne Modenkonversion reflektiert wird. Die erste Näherung erhält man dann, indem man annimmt, daß sich die geführte Welle darstellen läßt als Superposition der ungestörten einfallenden Welle und einer Störwelle, die teilweise reflektiert und teilweise transmittiert wird. Die Störwelle wird ermittelt durch Erfüllung der zusätzlichen Randbedingung an der Fehleroberfläche. Dabei tritt zwangsweise Modenkonversion und Divergenz des Schallbündels auf.

Wählt man als Modellfehler ein Rechteck mit der relativen Seitenlänge ζ, der relativen Höhe η und der relativen Exzentrizität ε , dann ergibt sich der Reflexionsfaktor speziell für den symmetrischen SH-Mode **SS₀** in nullter Näherung zu:

$$R^{(SS_0)} = \sqrt{\eta\zeta} \qquad (10)$$

Da die Formel (10) für den virtuellen Reflexionsfaktor de s symmetrischen SH-Modes **SS₀** von dem ebenen Modellfehlerrechteck nur die Parameter relative Fehlerlänge ζ und relative Fehlerhöhe η , nicht aber den Parameter relative Fehlerexzentrizität ε enthält, ist mit dem symmetrischen SH-Mode **SS₀** allein zwar eine Fehlerdetektion nicht aber eine Fehlerartklassierung möglich.

Für die symmetrischen SH-Moden **SSₘ** mit *m > 0* lautet die entsprechende Formel:

$$R^{(SS_m)} = \sqrt{\eta\zeta\left[1 + \frac{sin(2m\pi\eta)\cos(2m\pi\varepsilon)}{2m\pi\eta}\right]} \qquad (11)$$

Für die antisymmetrischen SH-Moden **AS$_m$** lautet die entsprechende Formel:

$$R^{(AS_m)} = \sqrt{\eta\zeta\left[1 - \frac{sin((2m+1)\pi\eta)cos((2m+1)\pi\eta)}{(2m+1)\pi\eta}\right]} \qquad (12)$$

Da die Formeln (5) und (6) für den Reflexionsfaktor in null ter Näherung alle drei relevanten Parameter $\varepsilon$, $\eta$ und $\zeta$ des ebenen Modellfehlers enthalten, ist mit den Moden **SS$_m$** mit $m > 0$ und **AS$_m$** sowohl eine Fehlerdetektion als auch eine Fehlerartklassierung möglich.

**Lamb-Moden**

Die Lamb-Moden als Lösung des Randwertproblems geführter elastischer Wellen in einer isotropen, homogenen, nicht piezoelektrischen, dämpfungsfreien Platte sind dadurch gekennzeichnet, daß eine Verknüpfung zwischen der lateralen und der axialen Teilchenauslenkung besteht, so daß eine elliptisch polarisiert e Schwingung entsteht.

Als Dispersionsgleichung für die symmetrischen Lamb-Mode n ergibt sich gemäß

$$F(\Theta,\gamma;q) := (\Theta - 2)^2 cos\left(+\gamma\sqrt{q\Theta - 1}\right)sin\left(+\gamma\sqrt{\Theta - 1}\right)$$
$$+4\sqrt{q\Theta - 1}\sqrt{\Theta - 1}sin\left(+\gamma\sqrt{q\Theta - 1}\right)cos\left(+\gamma\sqrt{\Theta - 1}\right) = 0 \qquad (13)$$

eine impliziten Funktionsgleichung für $\Theta = \Theta(\gamma; q)$, die sich jedoch analytisch nicht explizit darstellen läßt. Untersucht man die Funktionsgleichung (13) mit Mitteln der Funktionentheorie, so zeigt sich, daß es abzählbar unendlich viele Funktionszweige gibt, die sich nirgends schneiden und die daher eindeutig i n aufsteigender Folge numeriert werden könnten. In Analogie zu den SH-Moden numeriert man jedoch nicht die dimensionlosen Eigenwerte $\Theta$ durch, sondern - beginnend bei Null - die zugehörigen Eigenlösungen. W ir wollen diese symmetrischen Lamb-Moden mit **S$_m$** bezeichnen.

Der Reflexionsfaktor für die symmetrischenLamb-Moden **S$_m$** ergibt sich in nullter Näherung zu:

$$R^{(S_m)} = \sqrt{\zeta\frac{Z^{(S_m)}}{N^{(S_m)}}} \qquad (14)$$

Für die in (14) vorkommenden Hilfsgrößen gilt dabei:

$$Z^{(S_m)} = 4\gamma\eta\Theta^{(S_m)}(\gamma;q)\left(q\Theta^{(S_m)}(\gamma;q)-1\right)\sin^2\left(+\gamma\sqrt{q\Theta^{(S_m)}(\gamma;q)-1}\right)+\gamma\eta\Theta^{(S_m)}(\gamma;q)\left(\Theta^{(S_m)}(\gamma;q)-2\right)^2\cdot$$

$$\sin^2\left(+\gamma\sqrt{\Theta^{(S_m)}(\gamma;q)-1}\right)+2\left(q\Theta^{(S_m)}(\gamma;q)-1\right)\left(3\Theta^{(S_m)}(\gamma;q)-4\right)\sin^2\left(+\gamma\sqrt{q\Theta^{(S_m)}(\gamma;q)-1}\right)\cdot$$

$$\frac{\sin\left(+2\gamma\eta\sqrt{\Theta^{(S_m)}(\gamma;q)-1}\right)}{+\sqrt{\Theta^{(S_m)}(\gamma;q)-1}}\cos\left(+2\gamma\varepsilon\sqrt{\Theta^{(S_m)}(\gamma;q)-1}\right)+\left(\Theta^{(S_m)}(\gamma;q)-4q\Theta^{(S_m)}(\gamma;q)+4\right)\cdot$$

$$\left(\Theta^{(S_m)}(\gamma;q)-2\right)^2\sin^2\left(+\gamma\sqrt{\Theta^{(S_m)}(\gamma;q)-1}\right)\frac{\sin\left(+2\gamma\eta\sqrt{q\Theta^{(S_m)}(\gamma;q)-1}\right)}{+2\sqrt{q\Theta^{(S_m)}(\gamma;q)-1}}\cos\left(+2\gamma\varepsilon\sqrt{q\Theta^{(S_m)}(\gamma;q)-1}\right)$$

$$-2\left(\Theta^{(S_m)}(\gamma;q)-2\right)\left(\Theta^{(S_m)}(\gamma;q)-2q\Theta^{(S_m)}(\gamma;q)+4\right)\sqrt{q\Theta^{(S_m)}(\gamma;q)-1}\sqrt{\Theta^{(S_m)}(\gamma;q)-1}\cdot$$

$$\sin\left(+\gamma\sqrt{q\Theta^{(S_m)}(\gamma;q)-1}\right)\sin\left(+\gamma\sqrt{\Theta^{(S_m)}(\gamma;q)-1}\right)\cdot$$

$$(15)$$

$$\left\{\frac{\sin\left[\gamma\eta\left(+\sqrt{\Theta^{(S_m)}(\gamma;q)-1}-\sqrt{q\Theta^{(S_m)}(\gamma;q)-1}\right)\right]}{\left(+\sqrt{\Theta^{(S_m)}(\gamma;q)-1}-\sqrt{q\Theta^{(S_m)}(\gamma;q)-1}\right)}\cos\left[\gamma\varepsilon\left(+\sqrt{\Theta^{(S_m)}(\gamma;q)-1}-\sqrt{q\Theta^{(S_m)}(\gamma;q)-1}\right)\right]\right.$$

$$\left.+\frac{\sin\left[\gamma\eta\left(+\sqrt{\Theta^{(S_m)}(\gamma;q)-1}+\sqrt{q\Theta^{(S_m)}(\gamma;q)-1}\right)\right]}{\left(+\sqrt{\Theta^{(S_m)}(\gamma;q)-1}+\sqrt{q\Theta^{(S_m)}(\gamma;q)-1}\right)}\cos\left[\gamma\varepsilon\left(+\sqrt{\Theta^{(S_m)}(\gamma;q)-1}+\sqrt{q\Theta^{(S_m)}(\gamma;q)-1}\right)\right]\right\}$$

$$+2\left(\Theta^{(S_m)}(\gamma;q)-2\right)\left(q\Theta^{(S_m)}(\gamma;q)-1\right)\left(4-\Theta^{(S_m)}(\gamma;q)\right)\sin\left(+\gamma\sqrt{q\Theta^{(S_m)}(\gamma;q)-1}\right)\cdot$$

$$\sin\left(+\gamma\sqrt{\Theta^{(S_m)}(\gamma;q)-1}\right)\cdot$$

$$\left\{\frac{\sin\left[\gamma\eta\left(+\sqrt{\Theta^{(S_m)}(\gamma;q)-1}-\sqrt{q\Theta^{(S_m)}(\gamma;q)-1}\right)\right]}{\left(+\sqrt{\Theta^{(S_m)}(\gamma;q)-1}-\sqrt{q\Theta^{(S_m)}(\gamma;q)-1}\right)}\cos\left[\gamma\varepsilon\left(+\sqrt{\Theta^{(S_m)}(\gamma;q)-1}-\sqrt{q\Theta^{(S_m)}(\gamma;q)-1}\right)\right]\right.$$

$$\left.-\frac{\sin\left[\gamma\eta\left(+\sqrt{\Theta^{(S_m)}(\gamma;q)-1}+\sqrt{q\Theta^{(S_m)}(\gamma;q)-1}\right)\right]}{\left(+\sqrt{\Theta^{(S_m)}(\gamma;q)-1}+\sqrt{q\Theta^{(S_m)}(\gamma;q)-1}\right)}\cos\left[\gamma\varepsilon\left(+\sqrt{\Theta^{(S_m)}(\gamma;q)-1}+\sqrt{q\Theta^{(S_m)}(\gamma;q)-1}\right)\right]\right\}$$

und

$$N^{(S_m)} = 4\gamma\Theta^{(S_m)}(\gamma;q)\left(q\Theta^{(S_m)}(\gamma;q)-1\right)\sin^2\left(+\gamma\sqrt{q\Theta^{(S_m)}(\gamma;q)-1}\right) + \gamma\Theta^{(S_m)}(\gamma;q)\left(\Theta^{(S_m)}(\gamma;q)-2\right)^2$$

$$\sin^2\left(+\gamma\sqrt{\Theta^{(S_m)}(\gamma;q)-1}\right) + 2\left(q\Theta^{(S_m)}(\gamma;q)-1\right)\left(3\Theta^{(S_m)}(\gamma;q)-4\right)\sin^2\left(+\gamma\sqrt{q\Theta^{(S_m)}(\gamma;q)-1}\right)\cdot$$

$$\frac{\sin\left(2\gamma\sqrt{\Theta^{(S_m)}(\gamma;q)-1}\right)}{\sqrt{\Theta^{(S_m)}(\gamma;q)-1}} + \left(\Theta^{(S_m)}(\gamma;q)-4q\Theta^{(S_m)}(\gamma;q)+4\right)\left(\Theta^{(S_m)}(\gamma;q)-2\right)^2\cdot$$

$$\sin^2\left(+\gamma\sqrt{\Theta^{(S_m)}(\gamma;q)-1}\right)\frac{\sin\left(+2\gamma\sqrt{q\Theta^{(S_m)}(\gamma;q)-1}\right)}{+2\sqrt{q\Theta^{(S_m)}(\gamma;q)-1}} - 2\left(\Theta^{(S_m)}(\gamma;q)-2\right)\cdot$$

$$\left(\Theta^{(S_m)}(\gamma;q)-2q\Theta^{(S_m)}(\gamma;q)+4\right)\sqrt{q\Theta^{(S_m)}(\gamma;q)-1}\sqrt{\Theta^{(S_m)}(\gamma;q)-1}\sin\left(+\gamma\sqrt{q\Theta^{(S_m)}(\gamma;q)-1}\right)\cdot$$

$$\sin\left(+\gamma\sqrt{\Theta^{(S_m)}(\gamma;q)-1}\right)\cdot \tag{16}$$

$$\left\{\frac{\sin\left[\gamma\left(\sqrt{\Theta^{(S_m)}(\gamma;q)-1}-\sqrt{q\Theta^{(S_m)}(\gamma;q)-1}\right)\right]}{\left(\sqrt{\Theta^{(S_m)}(\gamma;q)-1}-\sqrt{q\Theta^{(S_m)}(\gamma;q)-1}\right)} + \frac{\sin\left[\gamma\left(\sqrt{\Theta^{(S_m)}(\gamma;q)-1}+\sqrt{q\Theta^{(S_m)}(\gamma;q)-1}\right)\right]}{\left(\sqrt{\Theta^{(S_m)}(\gamma;q)-1}+\sqrt{q\Theta^{(S_m)}(\gamma;q)-1}\right)}\right\}$$

$$+2\left(\Theta^{(S_m)}(\gamma;q)-2\right)\left(q\Theta^{(S_m)}(\gamma;q)-1\right)\left(4-\Theta^{(S_m)}(\gamma;q)\right)\sin\left(+\gamma\sqrt{q\Theta^{(S_m)}(\gamma;q)-1}\right)\cdot$$

$$\sin\left(+\gamma\sqrt{\Theta^{(S_m)}(\gamma;q)-1}\right)\cdot$$

$$\left\{\frac{\sin\left[\gamma\left(\sqrt{\Theta^{(S_m)}(\gamma;q)-1}-\sqrt{q\Theta^{(S_m)}(\gamma;q)-1}\right)\right]}{\left(\sqrt{\Theta^{(S_m)}(\gamma;q)-1}-\sqrt{q\Theta^{(S_m)}(\gamma;q)-1}\right)} - \frac{\sin\left[\gamma\left(\sqrt{\Theta^{(S_m)}(\gamma;q)-1}+\sqrt{q\Theta^{(S_m)}(\gamma;q)-1}\right)\right]}{\left(\sqrt{\Theta^{(S_m)}(\gamma;q)-1}+\sqrt{q\Theta^{(S_m)}(\gamma;q)-1}\right)}\right\}$$

Da die Formeln (14) bis (16) für den Reflexionsfaktor der symmetrischen Lamb-Moden $S_m$ in nullter Näherung den Parameter $\zeta$ explizit und die beiden Parameter $\eta$ und $\varepsilon$ implizit enthalten, ist mit diesen Moden sowohl eine Fehlerdetektion als auch eine Fehlerartklassierung möglich.

Für die antisymmetrischen Lamb-Moden $A_m$ lassen sich in strenger Analogie zu den Formeln (14) bis (16) die korrespondierenden Formeln herleiten. Auch für die antisymmetrischen Lamb-Moden gilt dann, daß mit ihnen sowohl e ine Fehlerdetektion als auch eine Fehlerartklassierung möglich ist. Vorzugsweise wird der Mode $A_0$ eingesetzt, dah hier die Umsetzung in der Praxis die saubersten Meßsignale liefert, da sie durch nicht durch "Fremdmodensignale" von symmetrischen Moden überlagert sind.

**Patentansprüche**

1. Verfahren zur Festkörperprüfung mit geführten Ultraschallwellen, bei dem eine erste und eine zweite geführte Ultraschallwelle mittels eines Ultraschallsenders in einem Festkörper erzeugt wird, Reflexionswellen der ersten und zweiten Ukraschallwelle mit einem Ultraschallempfänger detektiert werden und durch Kombination der detektierten Werte der ersten Welle und der detektierten Werte der zweiten Welle Strukturen oder Materialfehler im Festkörper ermittelt werden.

2. Verfahren nach Anspruch 1, gekennzeichnet durch die Verwendung von Plattenwellen.

3. Verfahren nach Anspruch 1 oder 2, gekennzeichnet durch die Verwendung von Rohr- oder Stabwellen.

**4.** Verfahren nach Anspruch 2, dadurch gekennzeichnet, daß mit den Wellen eine Artklassierung und eine Größenermittlung von Materialfehlern durchgeführt wird.

**5.** Verfahren nach einem oder mehreren der Ansprüche 1 bis 4, dadurch gekennzeichnet, daß die erste Welle eine Lambwelle und die zweite Welle eine SH-Welle ist.

**6.** Verfahren nach Anspruch 5, dadurch gekennzeichnet, daß die Lambwelle eine S-0 Welle und die SH-Welle eine S-1 Welle ist.

**7.** Verfahren nach einem oder mehreren der Ansprüche 1 bis 6, dadurch gekenzeichnet, daß die Fehlerauswertung dadurch beschleunigt wird, daß alle Reflexionswerte in einem erwarteten Bereich vor der Messung in Fehlerwerte umgerechnet werden und bei der Messung ein Vergleich der gemessenen Reflexionswerte mit den zuvor errechneten Werten erfolgt.

**8.** Verfahren nach einem oder mehreren der Ansprüche 1 bis 7, dadurch gekennzeichnet, daß die Ermittlung der Fehlerart und der Fehlergröße mit Hilfe des folgenden Zusammenhangs erfolgt:

$$Z^{(S_m)} = 4\gamma\eta\,\Theta^{(S_m)}(\gamma;q)\left(q\Theta^{(S_m)}(\gamma;q)-1\right)\sin^2\left(+\gamma\sqrt{q\Theta^{(S_m)}(\gamma;q)-1}\right) + \gamma\eta\Theta^{(S_m)}(\gamma;q)\left(\Theta^{(S_m)}(\gamma;q)-2\right)^2 \cdot$$

$$\sin^2\left(+\gamma\sqrt{\Theta^{(S_m)}(\gamma;q)-1}\right) + 2\left(q\Theta^{(S_m)}(\gamma;q)-1\right)\left(3\Theta^{(S_m)}(\gamma;q)-4\right)\sin^2\left(+\gamma\sqrt{\Theta^{(S_m)}(\gamma;q)-1}\right)\cdot$$

$$\frac{\sin\left(+2\gamma\eta\sqrt{\Theta^{(S_m)}(\gamma;q)-1}\right)}{+\sqrt{\Theta^{(S_m)}(\gamma;q)-1}}\cos\left(+2\gamma\varepsilon\sqrt{\Theta^{(S_m)}(\gamma;q)-1}\right) + \left(\Theta^{(S_m)}(\gamma;q)-4q\Theta^{(S_m)}(\gamma;q)+4\right)\cdot$$

$$\left(\Theta^{(S_m)}(\gamma;q)-2\right)^2\sin^2\left(+\gamma\sqrt{\Theta^{(S_m)}(\gamma;q)-1}\right)\frac{\sin\left(+2\gamma\eta\sqrt{q\Theta^{(S_m)}(\gamma;q)-1}\right)}{+2\sqrt{q\Theta^{(S_m)}(\gamma;q)-1}}\cos\left(+2\gamma\varepsilon\sqrt{q\Theta^{(S_m)}(\gamma;q)-1}\right)$$

$$-2\left(\Theta^{(S_m)}(\gamma;q)-2\right)\left(\Theta^{(S_m)}(\gamma;q)-2q\Theta^{(S_m)}(\gamma;q)+4\right)\sqrt{q\Theta^{(S_m)}(\gamma;q)-1}\sqrt{\Theta^{(S_m)}(\gamma;q)-1}\cdot$$

$$\sin\left(+\gamma\sqrt{q\Theta^{(S_m)}(\gamma;q)-1}\right)\sin\left(+\gamma\sqrt{\Theta^{(S_m)}(\gamma;q)-1}\right)\cdot$$

$$(15)$$

$$\left\{\frac{\sin\left[\gamma\eta\left(+\sqrt{\Theta^{(S_m)}(\gamma;q)-1}-\sqrt{q\Theta^{(S_m)}(\gamma;q)-1}\right)\right]}{\left(+\sqrt{\Theta^{(S_m)}(\gamma;q)-1}-\sqrt{q\Theta^{(S_m)}(\gamma;q)-1}\right)}\cos\left[\gamma\varepsilon\left(+\sqrt{\Theta^{(S_m)}(\gamma;q)-1}-\sqrt{q\Theta^{(S_m)}(\gamma;q)-1}\right)\right]\right.$$

$$\left.+\frac{\sin\left[\gamma\eta\left(+\sqrt{\Theta^{(S_m)}(\gamma;q)-1}+\sqrt{q\Theta^{(S_m)}(\gamma;q)-1}\right)\right]}{\left(+\sqrt{\Theta^{(S_m)}(\gamma;q)-1}+\sqrt{q\Theta^{(S_m)}(\gamma;q)-1}\right)}\cos\left[\gamma\varepsilon\left(+\sqrt{\Theta^{(S_m)}(\gamma;q)-1}+\sqrt{q\Theta^{(S_m)}(\gamma;q)-1}\right)\right]\right\}$$

$$+2\left(\Theta^{(S_m)}(\gamma;q)-2\right)\left(q\Theta^{(S_m)}(\gamma;q)-1\right)\left(4-\Theta^{(S_m)}(\gamma;q)\right)\sin\left(+\gamma\sqrt{q\Theta^{(S_m)}(\gamma;q)-1}\right)\cdot$$

$$\sin\left(+\gamma\sqrt{\Theta^{(S_m)}(\gamma;q)-1}\right)\cdot$$

$$\left\{\frac{\sin\left[\gamma\eta\left(+\sqrt{\Theta^{(S_m)}(\gamma;q)-1}-\sqrt{q\Theta^{(S_m)}(\gamma;q)-1}\right)\right]}{\left(+\sqrt{\Theta^{(S_m)}(\gamma;q)-1}-\sqrt{q\Theta^{(S_m)}(\gamma;q)-1}\right)}\cos\left[\gamma\varepsilon\left(+\sqrt{\Theta^{(S_m)}(\gamma;q)-1}-\sqrt{q\Theta^{(S_m)}(\gamma;q)-1}\right)\right]\right.$$

$$\left.-\frac{\sin\left[\gamma\eta\left(+\sqrt{\Theta^{(S_m)}(\gamma;q)-1}+\sqrt{q\Theta^{(S_m)}(\gamma;q)-1}\right)\right]}{\left(+\sqrt{\Theta^{(S_m)}(\gamma;q)-1}+\sqrt{q\Theta^{(S_m)}(\gamma;q)-1}\right)}\cos\left[\gamma\varepsilon\left(+\sqrt{\Theta^{(S_m)}(\gamma;q)-1}+\sqrt{q\Theta^{(S_m)}(\gamma;q)-1}\right)\right]\right\}$$

und

$$N^{(S_m)} = 4\gamma\Theta^{(S_m)}(\gamma;q)\left(q\Theta^{(S_m)}(\gamma;q)-1\right)\sin^2\left(+\gamma\sqrt{q\Theta^{(S_m)}(\gamma;q)-1}\right) + \gamma\Theta^{(S_m)}(\gamma;q)\left(\Theta^{(S_m)}(\gamma;q)-2\right)^2$$

$$\sin^2\left(+\gamma\sqrt{\Theta^{(S_m)}(\gamma;q)-1}\right) + 2\left(q\Theta^{(S_m)}(\gamma;q)-1\right)\left(3\Theta^{(S_m)}(\gamma;q)-4\right)\sin^2\left(+\gamma\sqrt{q\Theta^{(S_m)}(\gamma;q)-1}\right)\cdot$$

$$\frac{\sin\left(2\gamma\sqrt{\Theta^{(S_m)}(\gamma;q)-1}\right)}{\sqrt{\Theta^{(S_m)}(\gamma;q)-1}} + \left(\Theta^{(S_m)}(\gamma;q)-4q\Theta^{(S_m)}(\gamma;q)+4\right)\left(\Theta^{(S_m)}(\gamma;q)-2\right)^2\cdot$$

$$\sin^2\left(+\gamma\sqrt{\Theta^{(S_m)}(\gamma;q)-1}\right)\frac{\sin\left(+2\gamma\sqrt{q\Theta^{(S_m)}(\gamma;q)-1}\right)}{+2\sqrt{q\Theta^{(S_m)}(\gamma;q)-1}} - 2\left(\Theta^{(S_m)}(\gamma;q)-2\right)\cdot$$

$$\left(\Theta^{(S_m)}(\gamma;q)-2q\Theta^{(S_m)}(\gamma;q)+4\right)\sqrt{q\Theta^{(S_m)}(\gamma;q)-1}\sqrt{\Theta^{(S_m)}(\gamma;q)-1}\sin\left(+\gamma\sqrt{q\Theta^{(S_m)}(\gamma;q)-1}\right)\cdot$$

$$\sin\left(+\gamma\sqrt{\Theta^{(S_m)}(\gamma;q)-1}\right)\cdot \tag{16}$$

$$\left\{\frac{\sin\left[\gamma\left(\sqrt{\Theta^{(S_m)}(\gamma;q)-1}-\sqrt{q\Theta^{(S_m)}(\gamma;q)-1}\right)\right]}{\left(\sqrt{\Theta^{(S_m)}(\gamma;q)-1}-\sqrt{q\Theta^{(S_m)}(\gamma;q)-1}\right)} + \frac{\sin\left[\gamma\left(\sqrt{\Theta^{(S_m)}(\gamma;q)-1}+\sqrt{q\Theta^{(S_m)}(\gamma;q)-1}\right)\right]}{\left(\sqrt{\Theta^{(S_m)}(\gamma;q)-1}+\sqrt{q\Theta^{(S_m)}(\gamma;q)-1}\right)}\right\}$$

$$+2\left(\Theta^{(S_m)}(\gamma;q)-2\right)\left(q\Theta^{(S_m)}(\gamma;q)-1\right)\left(4-\Theta^{(S_m)}(\gamma;q)\right)\sin\left(+\gamma\sqrt{q\Theta^{(S_m)}(\gamma;q)-1}\right)\cdot$$

$$\sin\left(+\gamma\sqrt{\Theta^{(S_m)}(\gamma;q)-1}\right)\cdot$$

$$\left\{\frac{\sin\left[\gamma\left(\sqrt{\Theta^{(S_m)}(\gamma;q)-1}-\sqrt{q\Theta^{(S_m)}(\gamma;q)-1}\right)\right]}{\left(\sqrt{\Theta^{(S_m)}(\gamma;q)-1}-\sqrt{q\Theta^{(S_m)}(\gamma;q)-1}\right)} - \frac{\sin\left[\gamma\left(\sqrt{\Theta^{(S_m)}(\gamma;q)-1}+\sqrt{q\Theta^{(S_m)}(\gamma;q)-1}\right)\right]}{\left(\sqrt{\Theta^{(S_m)}(\gamma;q)-1}+\sqrt{q\Theta^{(S_m)}(\gamma;q)-1}\right)}\right\}$$

9. Verfahren nach einem oder mehreren der Ansprüche 1 bis 8, dadurch gekennzeichnet, daß der Meßwert eines Fehlers in Relation zu einem Referenzecho im Prüfmaterial gebracht wird und der relative Meßwert für die Ermittlung der Fehlerart und der Fehlergröße benutzt wird.

EP 1 054 255 A1

Europäisches
Patentamt

EUROPÄISCHER RECHERCHENBERICHT

Nummer der Anmeldung

EP 99 10 9997

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | EP 0 158 929 A (KRAFTWERK UNION AG) 23. Oktober 1985 (1985-10-23) * Zusammenfassung * | 1 | G01N29/10 |
| Y | EP 0 276 308 A (HITACHI CONSTRUCTION MACHINERY) 3. August 1988 (1988-08-03) * Zusammenfassung; Abbildung 1 * | 1 | |
| A | JP 11 023543 A (ISHIKAWAJIMA HARIMA HEAVY IND CO LTD) 29. Januar 1999 (1999-01-29) * Zusammenfassung * | 1 | |
| A | US 4 570 487 A (GRUBER GEORGE J) 18. Februar 1986 (1986-02-18) * Zusammenfassung * | 1 | |
| A | DE 33 09 470 A (INST ELEKTROSWARKI PATONA) 20. September 1984 (1984-09-20) * Zusammenfassung * | 1 | |
| A | BAZULIN E G ET AL: "USE OF BOTTOM ECHO PULSES FOR AMPLIFICATION OF THE IMAGE OF DEFECTS RECONSTRUCTED FROM DIGITAL ACOUSTIC HOLOGRAMS" RUSSIAN JOURNAL OF NONDESTRUCTIVE TESTING,US,CONSULTANTS BUREAU. NEW YORK, Bd. 29, Nr. 7, 1993, Seite 496-501 XP000455134 ISSN: 1061-8309 * Zusammenfassung * | 1 | RECHERCHIERTE SACHGEBIETE (Int.Cl.7) G01N |

Der vorliegende Recherchenbericht wurde für alle Patentansprüche erstellt

| Recherchenort | Abschlußdatum der Recherche | Prüfer |
|---|---|---|
| DEN HAAG | 3. Dezember 1999 | Duchatellier, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

13

## ANHANG ZUM EUROPÄISCHEN RECHERCHENBERICHT
## ÜBER DIE EUROPÄISCHE PATENTANMELDUNG NR.

EP 99 10 9997

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-12-1999

| Im Recherchenbericht angeführtes Patentdokument | Datum der Veröffentlichung | Mitglied(er) der Patentfamilie | Datum der Veröffentlichung |
|---|---|---|---|
| EP 0158929 A | 23-10-1985 | DE 3414362 A<br>BR 8501767 A<br>ES 542238 A<br>JP 60235054 A<br>US 4640131 A | 17-10-1985<br>10-12-1985<br>16-11-1986<br>21-11-1985<br>03-02-1987 |
| EP 0276308 A | 03-08-1988 | WO 8702462 A<br>US 4914952 A | 23-04-1987<br>10-04-1990 |
| JP 11023543 A | 29-01-1999 | KEINE | |
| US 4570487 A | 18-02-1986 | US 4299128 A<br>US 4435984 A | 10-11-1981<br>13-03-1984 |
| DE 3309470 A | 20-09-1984 | KEINE | |

EPO FORM P0461

Für nähere Einzelheiten zu diesem Anhang : siehe Amtsblatt des Europäischen Patentamts, Nr.12/82